Europäisches Patentamt

European Patent Office

Office européen des brevets

(11) Veröffentlichungsnummer: **0 299 217 B1**

(12) **EUROPÄISCHE PATENTSCHRIFT**

(45) Veröffentlichungstag der Patentschrift: **29.07.92**

(21) Anmeldenummer: **88109516.0**

(22) Anmeldetag: **15.06.88**

(51) Int. Cl.⁵: **G01M 17/00, G01M 7/00**

(54) **Rüttelprüfstand für Fahrzeuge, insbesondere Personenwagen.**

(30) Priorität: **16.07.87 DE 3723476**

(43) Veröffentlichungstag der Anmeldung:
**18.01.89 Patentblatt 89/03**

(45) Bekanntmachung des Hinweises auf die
Patenterteilung:
**29.07.92 Patentblatt 92/31**

(84) Benannte Vertragsstaaten:
**DE ES FR GB IT**

(56) Entgegenhaltungen:
**DE-B- 1 101 812**
**GB-A- 1 144 342**

**SOVIET INVENTIONS ILLUSTRATED,Sektion R, Woche B32, 21. September 1979 DERWENT PUBLICATIONS LTD., London, R15**

(73) Patentinhaber: **CARL SCHENCK AG**
**Landwehrstrasse 55 Postfach 40 18**
**W-6100 Darmstadt(DE)**

(72) Erfinder: **Axt, Werner, Dipl.-Ing.**
**Schlesierstrasse 9**
**W-6100 Darmstadt(DE)**
Erfinder: **Lohe, Rainer, Dr.**
**Schillerstrasse 37**
**W-6112 Gross-Zimmern(DE)**
Erfinder: **Mayland, Kay, Dr.**
**Ernst-Ludwig-Weg 36**
**W-6101 Bickenbach(DE)**
Erfinder: **Speckhardt, Bernd**
**An der Eschollmühle 10**
**W-6100 Darmstadt-Eberstadt(DE)**

(74) Vertreter: **Brandt, Ernst-Ulrich**
**Fa. Carl Schenck AG Patentabteilung Landwehrstrasse 55 Postfach 40 18**
**W-6100 Darmstadt 1(DE)**

# Beschreibung

Die Erfindung betrifft einen Rüttelprüfstand für Fahrzeuge, insbesondere Personenwagen, mit mindestens einem Rüttel- oder Schwingtisch und mindestens einer Radaufstandsfläche für die Fahrzeugräder.

Ein derartiger Rüttelprüfstand ist aus der DE-B-1 101 812 bekannt.

Aus der VDI-Zeitschrift Bd. 114 (1972) Nr. 17, S. 1279 bis 1288 ist ein Rütteltisch für komplette Fahrzeuge, insbesondere Personenwagen bekannt, der mit servohydraulisch gesteuerten und hydraulisch betätigten Hubvorrichtungen für die Fahrzeugräder arbeitet. Solche Prüfstände erlauben eine Vielzahl von Prüfungen, bedingen aber einen großen konstruktiven und fertigungstechnischen Aufwand und haben einen verhältnismäßig hohen Energieverbrauch. Darüber hinaus werden die Reaktionskräfte, die an solchen Prüfständen auftreten, voll auf das Fundament übertragen. Für einfache Anwendungsfälle, wie z.B. eine Rüttelprüfung zur Auslösung von Setzvorgängen bei fertig montierten Fahrzeugen am Ende einer Fertigungsstraße sind solche Prüfstände zu aufwendig.

Es ist Aufgabe der vorliegenden Erfindung einen Rüttelprüfstand zu schaffen, der einfache Rüttelprüfungen des Fahrzeugs ermöglicht, wobei auch eine Verwindung des Fahrwerks bzw. Fahrzeugs durch unterschiedlich hohes Anheben der Räder nachgebildet werden soll. Diese Aufgabe wird durch die in den Patentansprüchen angegebenen Merkmale gelöst. Die Patentansprüche betreffen auch Ausgestaltungen der Erfindung.

Das einfache Bauprinzip des Prüfstandes mit einem Zweimassen-Schwingsystem und Fliehkrafterregung ergibt einen einfachen, robusten und preisgünstigen Gesamtaufbau und gewährleistet neben hoher Betriebssicherheit einen niedrigen Energieverbrauch sowie eine gute Schwingungsisolierung. Zweckmäßigerweise wird das Schwingsystem als überkritisch arbeitendes System ausgebildet. Die Fliehkraft der Schwingungserreger wirkt nur auf die Nutzmasse, während die Isoliermasse lediglich durch Federkräfte erregt wird. Sie führt daher nur kleine Schwingungen aus, die keine nennenswerten dynamischen Fundamentkräfte entstehen lassen.

Durch die Verwendung je eines Schwingtisches für die Vorder- und Hinterachse eines Fahrzeugs kann das gesamte Fahrzeug in einem Prüfvorgang einer Rüttelprüfung unterzogen werden. Hierbei können die Prüfstände für die Vorder- und die Hinterachse gleichphasig oder durch Verstellung der Kupplung zwischen den Antriebsmotoren mit unterschiedlicher Phasenlage der Fliehkrafterreger bzw. Schwingtische betrieben werden. Bei getrennter Kupplung können die einzelnen Prüfstände für die Vorder- und Hinterachse auch unabhängig voneinander betrieben werden.

Durch den Einbau von besonderen Hubvorrichtungen für die Räder, die im Rütteltisch angeordnet sind, aber getrennt von diesem betrieben werden können, ist es möglich, das Fahrwerk bzw. das Fahrzeug durch unterschiedliches Anheben der Räder rechts/links an der Vorder- und/oder Hinterachse zu verwinden und damit die Radaufhängung bzw. das Fahrwerk entsprechend zu belasten.

Auf dem vorgeschlagenen Rüttelprüfstand können Fahrzeuge zur Fahrwerkseinstellung vorbereitet werden. Durch Rütteln und Verwinden werden Setzvorgänge im Fahrgestell der Fahrzeuge erzeugt. Durch die vorweggenommenen Setzvorgänge bleiben die anschließend eingestellten Fahrgestellgrößen, wie Sturz, Nachlauf, Vorspur usw., weitgehend konstant. Ohne vorweggenommene Setzvorgänge könnten sich die eingestellten Größen im Betrieb schnell ändern, was eine Neueinstellung der Fahrgestellgrößen schon nach kurzer Zeit erfordern würde. Rütteln hilft darüberhinaus, lose Teile wie Bremsleitungen, Auspuffanlage und anderes durch Geräuschentwicklung zu erkennen. Ebenso kann durch Rütteln die Funktion von elektrischen Steckverbindungen überprüft werden.

Weitere zweckmäßige und vorteilhafte Ausgestaltungen der Erfindung ergeben sich aus den übrigen abhängigen Ansprüchen.

Die Erfindung wird an einem Ausführungsbeispiel in der Zeichnung dargestellt und in der folgenden Beschreibung näher erläutert. Es zeigen Fig. 1 eine Seitenansicht, Fig. 2 eine Draufsicht und Fig. 3 eine Frontansicht eines Rüttelprüfstandes mit zwei Rütteltischen.

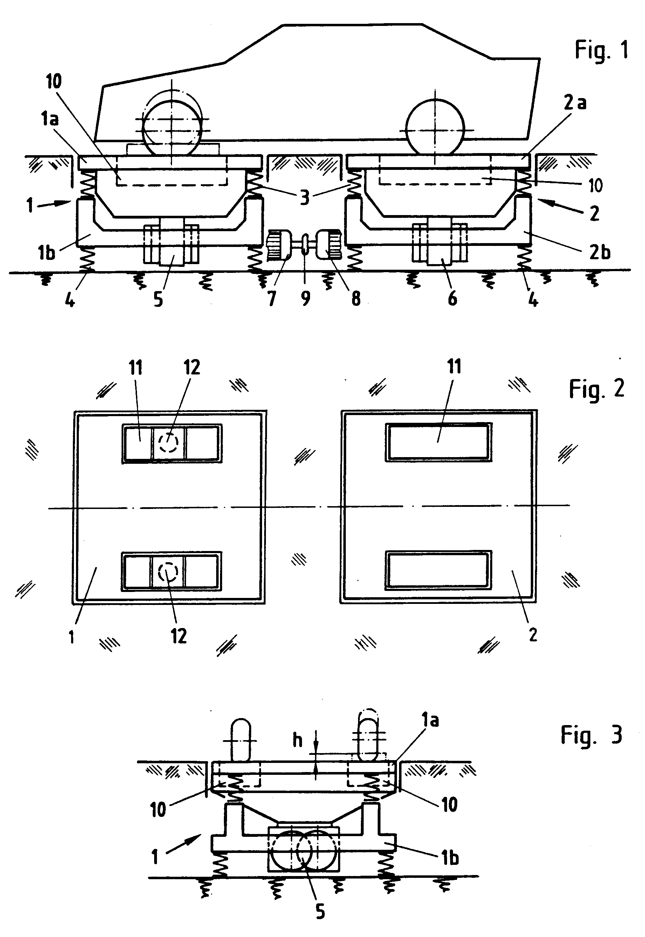

Der in den Figuren 1 - 3 dargestellte Rüttelprüfstand besteht aus zwei voneinander unabhängigen Einzelprüfständen für die Vorder- und die Hinterachse eines Fahrzeuges mit zwei Rüttel- oder Schwingtischen 1, 2, von denen der Schwingtisch 1 die Vorderachse und der Schwingtisch 2 die Hinterachse des Fahrzeuges, insbesondere eines Personenwagens aufnimmt. Jeder Schwingtisch besteht aus einer Nutzmasse 1a, 2a, die über Federn 3 auf einer Isoliermasse 1b, 2b abgestützt ist. Die Isoliermasse ihrerseits ist ebenfalls über Federn 4 auf dem Fundament, einem Fundamentrahmen od. dgl. abgestützt.

An der Nutzmasse 1a, 2a der Schwingtische sind Fliehkrafterreger in Form von Richterregern 5, 6 angeordnet. Die Erreger werden von fest auf dem Fundament oder dgl. aufgestellten Antriebsmotoren 7, 8 direkt angetrieben und erzeugen im wesentlichen vertikal gerichtete, lineare Erregerkräfte bzw. eine entsprechende Schwingbewegung an der Nutzmasse. Die Fliehkrafterreger und die Antriebsmotoren sind im dargestellten Ausführungsbeispiel so angeordnet, daß die Erregerkräfte im wesentlichen in der vertikalen Längsmittelebene der Schwingtische angreifen (s. Fig. 3).

Die Antriebsmotoren sind durch eine Kupplung 9 miteinander verbindbar, so daß beide Schwingtische 1, 2 mit der gleichen Drehzahl bzw. Frequenz und in gleicher Phasenlage der Schwingungserreger antreibbar sind. Durch Verstellen der Kupplung 9 kann die Phasenlage der Schwingbewegung zwischen den beiden Rütteltischen verändert werden bzw. gleich oder unterschiedlich eingestellt werden. Die Fliehkraft wirkt auf die Nutzmasse, die Isoliermasse wird lediglich durch Federkräfte erregt.

Im Bedarfsfall und mit entsprechend größerem Bauaufwand können anstelle der Einzelschwingtische für die Fahrzeugachsen auch Einzelschwingtische für jedes Fahrzeugrad vorgesehen werden.

In jedem Schwingtisch 1, 2 bzw. in der kastenförmig ausgebildeten Nutzmasse 1a, 2a der Tische sind zwei unabhängig voneinander arbeitende Hubvorrichtungen 10 eingebaut. Die Hubvorrichtungen wirken auf Radaufstandsflächen 11 für die Fahrzeugräder. Die Hubvorrichtungen sind z. B. als Scherenhubvorrichtungen ausgeführt und werden pneumatisch betätigt. Es sind jedoch auch andere Arten von Hubvorrichtungen für die Radaufstandsflächen verwendbar, die eine zur Oberfläche des Schwingtisches bzw. zu einer horizontalen Ebene parallele Anhebung der Radaufstandsflächen 11 ermöglichen.

Mit den Hubvorrichtungen können die Radaufstandsflächen 11 bzw. die Fahrzeugräder angehoben werden, z.B. bis zu einer Hubhöhe h (Fig. 3) von 100 mm. Hierbei ist es möglich, die Hubbewegung nach Frequenz, Zeitdauer und Betätigungsfolge usw. beliebig zu wählen und beliebige Betätigungsfolgen auch nach Programm ablaufen zu lassen. Die Radaufstandsflächen rechts/links und/oder vorn/hinten können z. B. im Gleichtakt oder im Gegentakt betätigt werden.

Die Rüttel- bzw. Schwingbewegung der Schwingtische 1, 2 und die Hubbewegungen der Radaufstandsflächen 11 werden im allgemeinen nacheinander ausgeführt. Die Hubvorrichtungen können hierbei verriegelt werden. Es ist jedoch auch möglich, Schwingbewegungen und Hubbewegungen gleichzeitig durchzuführen.

In die Radaufstandsflächen 11 können Radlastmeßeinrichtungen 12 zur Messung der Radaufstandskraft eingebaut werden. Damit können z. B. dynamische Radlaständerungen während des Rüttelvorganges erfaßt werden. Auf diese Weise lassen sich Rückschlüsse auf die Funktion des Federungs- bzw. Dämpfungssystems ziehen.

Der beschriebene Rüttelprüfstand kann mit einer Rechheneinrichtung zur Eingabe, Erfassung und Aufbereitung der Prüfdaten versehen werden.

**Patentansprüche**

1. Rüttelprüfstand für Fahrzeuge, insbesondere Personenwagen, mit mindestens einem Rüttel- oder Schwingtisch (1, 2) und mindestens einer Radaufstandsfläche (11) für ein Fahrzeugrad, dadurch gekennzeichnet, daß der Schwingtisch (1, 2) als Zweimassenschwingsystem mit Nutz- und Isoliermasse (1a, 2a/1b, 2b) sowie mindestens einem Fliehkrafterreger (5, 6) zur Erregung der Nutzmasse (1a, 2a) ausgebildet ist und zur Aufnahme mindestens eines Rades einer Fahrzeugachse ausgebildet ist und daß die mindestens eine Radaufstandsfläche (11) unabhängig vom Schwingtisch (1, 2) vertikal bewegbar ist.

2. Rüttelprüfstand nach Anspruch 1, dadurch gekennzeichnet, daß je ein Schwingtisch (1, 2) für die Vorder- und Hinterachse eines Fahrzeugs vorgesehen ist, daß die Fliehkrafterreger (5, 6) mittels Antriebsmotoren (7, 8) angetrieben werden und die Antriebsmotoren (7, 8) so angeordnet sind, daß die Antriebsmotoren (7, 8) kuppelbar sind, und daß die Phasenlage der Fliehkrafterreger (5, 6) zueinander an der Kupplung (9) der Antriebsmotoren (7, 8) einstellbar ist.

3. Rüttelprüfstand nach einem der vorhergehenden Ansprüche, dadurch gekennzeichnet, daß die Fliehkrafterreger (5, 6) als Richterreger ausgebildet sind.

4. Rüttelprüfstand nach einem der vorhergehenden Ansprüche, dadurch gekennzeichnet, daß die Aufstandsflächen (11) für die Fahrzeugräder parallel zur Oberfläche des Schwingtischs (1, 2) anhebbar sind.

5. Rüttelprüfstand nach Anspruch 4, dadurch gekennzeichnet, daß an den Radaufstandsflächen (11) pneumatische Hubvorrichtungen (10) mit mechanischen Führungen angeordnet sind.

6. Rüttelprüfstand nach einem der vorhergehenden Ansprüche, dadurch gekennzeichnet, daß die Schwingfrequenz des Schwingtisches (1, 2) auf die Eigenfrequenz des Fahrwerks des zu prüfenden Fahrzeugs einstellbar ist.

7. Rüttelprüfstand nach Anspruch 5, dadurch gekennzeichnet, daß die Hubhöhe (h) der Hubvorrichtungen (10) sowie die Frequenz, Zeitdauer und Betätigungsfolge der Hubbewegung beliebig wählbar bzw. einstellbar ist.

8. Rüttelprüfstand nach einem der vorhergehenden Ansprüche, dadurch gekennzeichnet, daß die Hubbewegung der Radaufstandsflächen (11) rechts/links und/oder vorn/hinten im Gleichtakt oder Gegentakt einstellbar ist.

9. Rüttelprüfstand nach einem der vorhergehenden Ansprüche, dadurch gekennzeichnet, daß in den Radaufstandsflächen (11) Meßeinrichtungen (12) zur Erfassung der Radlast angeordnet sind.

10. Rüttelprüfstand nach einem der vorhergehenden Ansprüche, dadurch gekennzeichnet, daß eine Recheneinrichtung zur Eingabe und/oder Erfassung und/oder Aufbereitung von Prüfdaten vorgesehen ist.

## Claims

1. Vibration test stand for vehicles, in particular passenger cars, with at least one jolting or vibrating table (1, 2) and at least one wheel contact surface (11) for a vehicle wheel, **characterised in that** the vibrating table (1, 2) is constructed as a two-mass vibration system with useful mass and insulating mass (1a, 2a/1b, 2b) and with at least one centrifugal force exciter (5, 6) for exciting the useful mass (1a, 2a) and is constructed for accommodating at least one wheel of a vehicle axle and that the at least one wheel contact surface (11) is movable vertically independently of the vibrating table (1, 2).

2. Vibration test stand according to claim 1, **characterised in that** a vibrating table (1, 2) is provided for the front and rear axle respectively of a vehicle, that the centrifugal force exciters (5, 6) are driven by means of drive motors (7, 8) and the drive motors (7, 8) are arranged so that the drive motors (7, 8) can be coupled, and that the phase positions of the centrifugal force exciters (5, 6) are adjustable to one another at the coupling (9) of the drive motors (7, 8).

3. Vibration test stand according to any one of the preceding claims, **characterised in that** the centrifugal force exciters (5, 6) are constructed as directional exciters.

4. Vibration test stand according to any one of the preceding claims, **characterised in that** the contact surfaces (11) for the vehicle wheels are able to be lifted parallel to the surface of the vibrating table (1, 2).

5. Vibration test stand according to claim 4, **characterised in that** at the wheel contact surfaces (11) pneumatic lifting devices (10) with mechanical guides are disposed.

6. Vibration test stand according to any one of the preceding claims, **characterised in that** the vibration frequency of the vibrating table (1, 2) is adjustable to the natural frequency of the chassis of the vehicle to be tested.

7. Vibration test stand according to claim 5, **characterised in that** the lifting height (h) of the lifting devices (10) and the frequency, duration and operating sequence of the lifting movement are selectable or adjustable as desired.

8. Vibration test stand according to any one of the preceding claims, **characterised in that** the lifting movement of the wheel contact surfaces (11) is adjustable to the right/left and/or forwards/backwards in phase or in anti-phase.

9. Vibration test stand according to any one of the preceding claims, **characterised in that** in the wheel contact surfaces (11) measuring devices (12) for detecting the wheel load are disposed.

10. Vibration test stand according to any one of the preceding claims, **characterised in that** a calculation device for the inputting and/or detecting and/or processing of test data is provided.

## Revendications

1. Banc d'essais à oscillation pour véhicules, en particulier pour voitures, avec au moins une table à secousses ou table oscillante (1,2) et au moins une surface de support de roue (11) pour une roue de véhicule, caractérisé en ce que la table oscillante (1,2) est réalisée sous la forme de système oscillant à deux masses, avec une masse utile et une masse d'isolation (1a,2a/1b,2b), ainsi qu'au moins un excitateur à force centrifuge (5,6) servant à exciter la masse utile (1a,2a), et est réalisée pour supporter au moins une roue d'un essieu de véhicule et que la au moins une surface de support de roue (11) est déplaçable, indépendamment de la table oscillante (1,2).

2. Banc d'essais à oscillation selon la revendication 1, caractérisé en ce qu'une table oscillante (1,2) est prévue pour chacun des essieux avant et arrière d'un véhicule, que l'excitateur à force centrifuge (5,6) est entraîné au moyens de moteurs (7,8), disposés de façon à pouvoir être accouplés et que la position en phase l'un par rapport à l'autre des excitateurs à force centrifuge (5,6) est réglable sur l'accouplement (9) des moteurs d'entraînement (7,8).

3. Banc d'essais à oscillation selon l'une des revendications précédentes, caractérisé en ce que les excitateurs à force centrifuge (5,6) sont réalisés sous forme d'excitateurs directionnels.

4. Banc d'essais à oscillation selon l'une des revendications précédentes, caractérisé en ce que les surfaces de support (11) pour les roues du véhicule peuvent être soulevées parallèlement à la surface de la table oscillante (1,2).

5. Banc d'essais à oscillation selon la revendication 4, caractérisé en ce que des dispositifs de levage (10) pneumatique, avec des guidages mécaniques, sont disposés sur les surfaces de support de roue (11).

6. Banc d'essais à oscillation selon l'une des revendications précédentes, caractérisé en ce que la fréquence oscillatoire de la table oscillante (1,2) est réglable à la fréquence propre du train de roues du véhicule à contrôler.

7. Banc d'essais à oscillation selon la revendication 5, caractérisé en ce que la hauteur de levée (h) des dispositif de levage (10), ainsi que la fréquence, la durée et l'ordre d'actionnement du mouvement de levée sont sélectionnables, ou réglables à volonté.

8. Banc d'essais à oscillation selon l'une des revendications précédentes, caractérisé en ce que le mouvement de levée des surfaces de support de roue (11) est réglable, en cadence ou à contretemps, à gauche/à droite et/ou vers l'avant/l'arrière.

9. Banc d'essais à oscillation selon l'une des revendications précédentes, caractérisé en ce que des dispositifs de mesure (12) destinés à mesurer la charge de la roue sont disposés dans les surfaces de support de roue (11).

10. Banc d'essais à oscillation selon l'une des revendications précédentes, caractérisé en ce qu'un dispositif de calcul est prévu, pour introduire et/ou acquérir et/ou traiter des données d'essai.

Fig. 1

Fig. 2

Fig. 3